# EUROPEAN PATENT APPLICATION

(11) **EP 3 480 385 A2**
(43) Date of publication of application: **08.05.2019**
(21) Application number: 18150326.9
(22) Date of filing: 04.01.2018
(51) Int. Cl.: E04C 2/12, E04C 2/24, E04C 2/296, E04C 2/52

(54) **A NOVEL INSULATED CROSS-LAMINATED CONSTRUCTION ELEMENT AND METHOD FOR USING THE SAME**

(30) Priority: 04.01.2017 BE 175001
(71) Applicant: Den Nieuwen Buiten BVBA, 2360 Oud-Turnhout (BE)
(72) Inventor: Laermans, Dave, 2360 Oud-Turnhout (BE)
(74) Representative: Brantsandpatents bvba

(57) **Abstract**

A novel insulated cross-laminated construction element includes an insulating core sandwiched between two external boards made of cross-laminated timber planks that advantageously provide structural strength and dimensional stability. The element also includes a tongue and groove arrangement fabricated into both its top and bottom surfaces in order to join the stacked members and can also include one or more notches running along the inner planks of an outside board so that, when the structural members are stacked, utility conduits are formed.

The method for using the element comprises the procedures and tools to assembly a plurality of structural members in vertical relationship to build a wall and create corner junctions in the form of a miter joint.

In this manner, the construction element can be used to simulate wooden log members and build log-type buildings with improved insulating properties, enhanced dimensional stability and simplified assembly characteristics.

## Description

### FIELD OF THE INVENTION

This invention relates to a construction element for the walls of timber structures. Furthermore, the invention relates to the method of assembly the same in building walls and corner junctions in prefabricated wooden structures.

### BACKGROUND OF THE INVENTION

Habitable wooden houses, known as log cabins or log buildings, have walls from horizontal solid wood beams. However, log buildings constructed from whole logs suffer from a variety of disadvantages such as poor thermal insulation, high shrinkage during time, difficulty of assembly and flammability; furthermore, they are often expensive and ecologically unsustainable.

A particularly serious problem regards the shrinkage, which lies in the range of 5 to 8% in one direction across the grain of the beam. This means that the height of a wall made of horizontal solid wood beams, which is about 3 m in the construction, over time may decrease by up to 24 cm. On the other hand, the shrinkage along the longitudinal direction, which is the fibers direction of the beam, is only about 1%. This problem has two negative implications: on one hand, it brings a number of constructive limitations regarding the size of windows, doors and other openings in load-bearing walls; on the other hand, while working, the wood can often cause a noisy, annoying crackling, which can be heard especially at night, thus affecting the living comfort.

Several attempts have been made to mitigate the described disadvantages by introducing multilayered laminated beams formed from individual planks, having fibers running parallel to the longitudinal direction of the beam, and glued together. Such boards reduce the abovementioned crackling, but behave in terms of shrinkage as well as solid wood beams.

The second main issue connected to the use of whole log members is the insufficient thermal insulation: modern building regulations have minimum requirements for wall insulation, which means that, in practice, houses cannot be built with the only timber.

Finally, solid wood beams can hardly host space for electric cables, heating and water pipes, as it is possible with conventional masonry instead.

Several attempts to address these problems have been performed since 1970's. US 3992838 is an example of first introduction in the middle '70s of a foam plastic layer in the wooden log to increase the insulation properties, and of improved tools to assembly the log members.

CA 1143124A is an example of introduction in the middle '80s of a composite building element that has two outer wooden boards separated by and secured to an intermediate layer of plastic foam.

CA 2326054 is an attempt to improve the stability of the log member during time through the use of an inner layer of oriented strand boards (OSB) connected to the core insulation layer. On one side, shrinkage can be limited, but on the other mechanical performances are affected due to the low bending resistance of OSB planks. The document also introduces a solution for corner junction, which however doesn't guarantee continuity of the insulation layer, thus creating thermal bridges.

EP 1963593B1 relates to a building element with insulation that requires fixing means for connecting the outer elements and the insulating element. However, these fixing means, even if they are made of a non-thermally conductive material, create thermal bridges inside the structure.

US 2011/0203193A1 reports a laminated insulated timber composed of a plurality of side planks, that on one side improve the dimensional stability, but on the other can't host utility conduits.

WO2015169325 relates to a layered insulated construction element with improved performances due to the materials and treatments which are used. However, it still does not provide any solutions to reduce the transversal shrinkage over time.

Although the above-mentioned references have brought some improvements, in building construction, there is still currently the need for a complete solution that might address all the aforesaid problems.

Thus, one purpose of the present invention is to make a construction element with minimized shrinkage along the transversal direction.

Another purpose of the present invention is to make a construction element with optimized insulating properties that doesn't show any thermal bridges along its structure.

It is also a purpose of the present invention the creation of a construction element that might host utility conduits without affecting the insulating and mechanical characteristics of the structural member.

The present invention aims also at providing a method for assembling a plurality of structural members in vertical relationship so as to build a wall that can ensure mechanical stability, airtight connections and ease of assembly.

A further purpose of the present invention is to provide a method for assembling the construction elements so as to build corner junctions in a miter join form that might ensure mechanical stability, ease of assembly and the continuity of the insulating element, thus avoiding the creation of thermal bridges.

In an effort to overcome the shortcomings of the state of the art, a novel insulated cross-laminated construction element and the method for using the same is disclosed herein.

### SUMMARY OF THE INVENTION

The present invention is set forth and characterized in the independent claims, while the dependent claims describe other characteristics of the invention or variants to the main inventive idea.
According to the present invention, the novel insulated cross-laminated construction element comprises a core and two outer composite boards. In a preferred embodiment of the invention, the core is composed of an insulating foam material, preferably providing thermal insulation, which is sandwiched between two outer elements made of cross-laminated timber planks, preferably providing structural strength and dimensional stability to the construction element.
Moreover, the core has multiple purposes: to provide the construction element with thermal insulating, fire retardant and insect resistant properties, and to reduce the amount of wood fibers needed. The insulation value of the construction element is adjusted by varying the type and the thickness of the foam material. According to some form of embodiment, the core can be manufactured from a rigid foam material such as extruded polystyrene foam.
The outer composite boards have also multiple purposes: they provide the construction element with structural strength, dimensional stability, additional thermal insulation and aesthetic appeal; and they can host utility conduits.
According to one feature of the present invention, the outer composites boards are composed of at least two planks whose fibers extend in the longitudinal direction of the beam, and of at least one plank, which is sandwiched and weatherproof glued between two longitudinal planks, with its fibers extending transversely to the longitudinal direction of the beam. Thus, according to the invention, each of the outer beams may consist of three layers, but advantageously it may also comprise a plurality of layers, always a layer whose fibers direction runs transversely to the longitudinal direction of the beam, sandwiched between two timber planks whose fibers run parallel to the longitudinal direction of the log member, so that ultimately, according to the invention, each outer board always has an odd number of planks. Subsequently, the construction element, according to the invention, presents an advantageous closed-off structure, so that each significant shrinkage, particularly that in the transverse direction of the beam, is prevented.
The mechanical strength and dimensional stability of the construction element can be adjusted by varying the thickness, number and material of the timber planks composing the outer boards. Particularly, according to some form of embodiment, the timber planks can be manufactured from high quality wood: for instance, from the Siberian pine, thanks to its superior ability to accept loads due to its small tree-ring width and high density, which are typical of the correspondent regional climate, with short summers and long, very cold winters. Furthermore, the Siberian pine is practically considered bacteria-free, as it shows down to 200-300 bacterial cells per cubic meter, a fact that makes it meet even the strictest medical standards, which establish, even in operating rooms, a maximum level of 500-1000 non-pathogenic microbes per cubic meter.
Furthermore, the outer planks are preferably kiln dried up to a moisture content with a value comprised between about 5 and about 18% and more preferably comprised between about 8 and about 14%.

According to some forms of embodiment, the longitudinal and transverse planks are preferably cold-pressed and glued to each other so as to form the outer composite boards by means of bonding agents that show excellent humidity resistance. One advantageous solution to avoid the use of adhesives with solvents, which could be released over time, is the application of bonding agents in aqueous dispersion, such as Polyvinyl Acetate.

According to some forms of the embodiment, the outer composite boards are preferably bonded to the inner core through the use of a structural grade adhesive. Advantageously, the adhesive can be a structural grade polyurethane, formaldehyde and solvent free, with proven durability and fire safety. Subsequently, the optimum properties of this kind of adhesive ensure that a strong adhesion is created at the interface between the core and the outer boards, so that no need of torque bolts or fixing means transversely crossing the entire width of the construction element is required. In fact, the novel construction element shows high compactness and, when submitted to compressive loads, no adhesive fractures appear between the outer boards and the inner core, but a cohesive fractures inside the core.

According to some forms of embodiment of the present invention, the individual construction elements are stacked together in a stable manner to form a wall through the use of a tongue and groove arrangement fabricated into both the inner core and the outer boards by milling the respective top and bottom surfaces of each structural member. Thus, when stacking the log members together, the trapezoidal slots of the upper course of members fit firmly into the trapezoidal keys of the bottom course of members.

According to another form of embodiment of the invention, utility conduits can be formed when the construction elements are stacked together during wall construction: in this configuration, at least one or two inner planks of the composite outer board contain one or more notches running along their entire height. Thus, when a first lower and a second upper structural member are stacked together, the notch of the first lower structural member combines with the notch of the second upper structural member forming a weatherproof conduit within the construction element which is suitable for carrying electrical wiring and other utilities, without affecting the mechanical and insulating characteristics of the log member. The utility conduits are advantageously created within the wooden planks and not within the insulating foam in order not to affect the weakest mechanical part of the structural member, which is the inner foam core, as shown during the above-mentioned compression tests.

The present invention also concerns the corresponding method of using the construction element. This method comprises the procedures and tools to assembly a plurality of structural members in vertical relationship to build a wall and create corner junctions in the form of a miter joint.

According to one form of embodiment of the present invention, the method for assembling a plurality of structural members in a vertical relationship to build a wall comprises fastening means to create mechanical connections and a sealing agent to create airtight connections. Fastening means crossing the composite boards all along their height are advantageously used to provide a mechanical junction between two vertically stacked elements. Fastening means can be for example customized screws characterized in that the central body is smooth to fix the upper construction element and the lower part is threaded to anchor the bottom element.
According to another advantageous form of embodiment of the method of the present invention, a sealant material is used to create airtight connection between a plurality of structural members assembled in a vertical relationship. A useful sealant material can be advantageously an elastomer that presents weathering, ageing and temperature resistance and has anti-microbial characteristics, for example a silicone elastomer.

According to another form of embodiment of the present invention, the method to assembly a plurality of structural members to create corner junctions comprises miter joints and engineered joint elements. When creating a corner junction, two structural members are cut along their transverse direction with an angle preferably comprised between about 30 and about 60 degrees, typically about 45 degrees, and juxtaposed at their ends. Their interfaces are preferably glued together using a bonding agent, for example a fix-bond on polyurethane base. According to another form of embodiment, engineered joint elements are used to ensure mechanical junction between construction elements in a miter joint. The engineered joint element is preferably formed by galvanized steel in order to guarantee a proper corrosion resistance. Furthermore, it is advantageously formed by an L-shaped blade which has a cylindrical part ending with a truncated cone at each of the two extremities. The method also provides that fitting holes, which have their diameter equal to that of the truncated cone in its medium height and their depth equal to the half height of the joint element, are fabricated into the two lower juxtaposed construction elements by drilling the inner plank of the corresponding outer boards. Subsequently, the joint element is half-hammered into the two incident construction elements. Finally, two upper juxtaposed members, previously glued and drilled as described, are hammered as long as the joint element enters their planks for half of its height. This form of embodiment ensures solidity, continuity of the thermal insulation and complete absence of thermal bridges in the corner junction.

### BRIEF DESCRIPTION OF THE DRAWINGS

The object of the invention is described in more detail with reference to the accompanying diagrammatic drawings. This is:
Fig. 1 is a cross-section of a construction element according to one form of embodiment of the present invention;
Fig. 2 is a plan view of another form of embodiment of the construction element according to the present invention;
Fig. 3 is a cross-section of a vertical assembly of construction elements according to one method of the present invention;
Fig. 4 is a three-dimensional scheme and an orthogonal projection of the engineered joint element according to another method of the present invention;
Fig. 5 is a plan view of a corner junction during one step of the assembly method according to the present invention;
Fig. 6 is a cross-section of a corner junction during three steps of the assembly method according to the present invention.

To facilitate comprehension, the same reference numbers have been used, where possible, to identify identical common elements in the drawings.

### DETAILED DESCRIPTION OF THE DRAWINGS

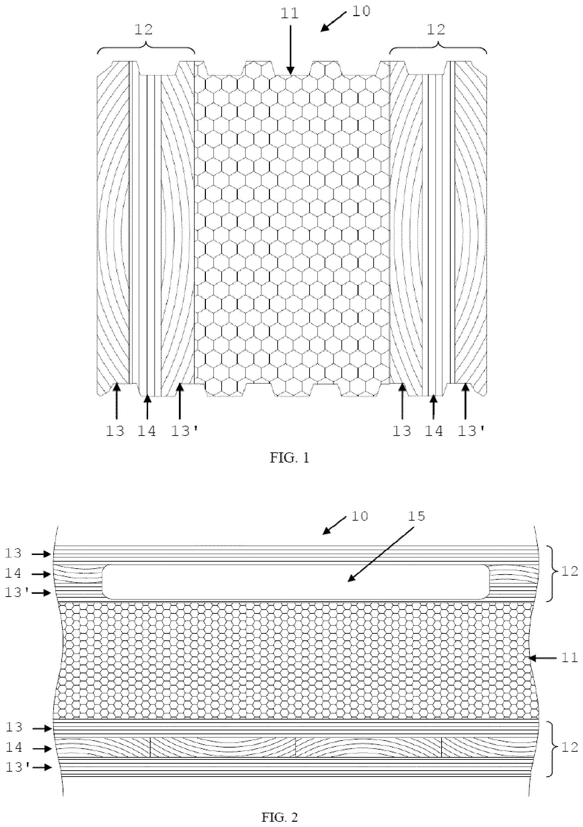

With reference to fig. 1, a construction element according to the present invention is indicated in its entirety by the reference number 10. In this case, the construction element 10 comprises an inner core 11 and two outer composite boards 12.
The inner core 11 is advantageously composed of an insulating foam material with the function of bringing thermal insulation, fire retardant and insect resistant properties to the construction element 10, without affecting the mechanical strength. According to some form of embodiment, the core can be manufactured from rigid foam material such as extruded polystyrene foam, meeting the UNI EN 13164 standards for thermal insulation products for building, belonging to class E according to the Euroclass EN 13501 for fire retardants and characterized by high compression resistance up to 300 kPa. The insulation value of the construction element is adjusted by varying the type and the thickness of the foam material. To provide proper insulation characteristics, the inner core can have for example a thickness comprised between about 10 and about 20 cm, in order to achieve a thermal insulating "R" value between about 2.80 and about 5 m²K/W and a thermal conductibility λ between about 0.034 and about 0.036 W/mK.
According to one feature of the present invention, the outer composites boards 12 are composed respectively of at least two planks 13 and 13', whose fibers extend in the longitudinal direction of the beam, and at least one plank 14, sandwiched and weatherproof glued between two longitudinal planks 13 and 13', with its fibers extending transversely to the longitudinal direction of the beam. Thus, according to the invention, each outer beam 12 may consist of three planks, but advantageously it can also comprise a plurality of planks, always a plank whose fibers direction runs transversely to the longitudinal direction of the beam, sandwiched between two timber planks whose fibers run parallel to the longitudinal direction of the log member, so that ultimately each outer board according to the invention always has an odd number of planks. Subsequently, the construction element according to the invention presents an advantageous closed-off structure, so that each significant shrinkage, particularly that in the transverse direction of the beam, is prevented. Merely to give an example, for the preparation of the planks 13 and 13', approximately 2 cm thick, about 12 to 15 cm wide, preferably about 13 cm wide, and about 12 m long wood bars are glued together. Furthermore, for the preparation of the planks 14, 2 cm thick, approximately 12 to 18 cm wide and about 20 cm long bars are laterally glued together. Planks 14 are then coated on both sides with a bonding agent that shows excellent humidity resistance, such as Polyvinyl Acetate, and cold-pressed and glued to the outer planks 13 and 13' to form the outer boards 12.
The described dimensions have proved to be particularly advantageous to fulfill the requirements of the outer composite boards which are structural strength, dimensional stability, additional thermal insulation, aesthetic appeal and possibility to host utility conduits. Nevertheless, the described dimensions are given as a non-restrictive example.
The mechanical strength and the dimensional stability of the construction element can be adjusted by varying the thickness, the number and the material of the timber planks composing the outer boards. Particularly, according to some form of embodiment, the timber planks can be advantageously manufactured from high quality wood, for instance, from the Siberian pine, thanks to its superior ability to accept loads due to its small tree-ring width and high density, and thanks to its minimum content of bacterial cells per cubic meter.
Furthermore, the timber planks are preferably kiln dried up to a moisture content preferably with a value comprised between about 5 and about 18% and more preferably comprised between about 8 and about 14%.

According to some forms of the embodiment, the outer composite boards 12 are preferably bonded to the inner core 11 through the use of a structural grade adhesive. Advantageously, the adhesive can be a structural grade polyurethane, ensuring that a strong adhesion is created at the interface between the core 11 and the outer boards 12, so that no need of torque bolts or fixing means, transversely crossing the entire width of the construction element, is required.

In an advantageous form of embodiment, a tongue and groove arrangement, visible in Fig. 1 on the upper and bottom part of the construction element 10, is fabricated by milling the upper and lower faces of the construction element.

Merely to give an example, the tongue and groove arrangement is fabricated by means of a multi-blade circular saw, performing approximately 7 runs in the longitudinal direction, thus creating grooves about 2 cm wide and about 2 cm deep. The result is a preferred arrangement in which the groove and the associated tongue in each case have a complementary truncated trapezoidal cross-section. Such a connection is not only shear-resistant and therefore suitable for its stocky shape to accommodate a delay attributable to lateral force, but also self-centering and therefore it compensates for possible defaults.

According to some form of embodiment of the present invention, utility conduits can be formed when the construction elements are stacked together during wall construction. Fig. 2 shows a plan view of the construction element 10, which presents an inner notch 15 aimed at creating an utility conduit. Fig. 2, which shows a notch fabricated into the inner planks 13' and 14, has to be considered as a non-restrictive example of one possible embodiment of the invention. Typically the inner notch involves two inner planks of one composite outer board, such as 13' and 14, and runs along their entire height, but it can also be carved out of two other inner planks, or out of a part of them, or out of one sole inside plank: in any case it will not be ever carved out of the insulating core or out of the outer plank of the outside board. Merely to give an example, the typical notch width is comprised between about 2 and about 5 cm, preferably about 4 cm; the notch length can vary from about 20 up to about 100 cm, depending on construction requirements.
In this way, when a first lower and a second upper structural member are stacked together, the notch of the first lower structural member combines with the notch of the second upper structural member forming a weatherproof conduit within the construction element which is suitable for carrying electrical wiring and other utilities, without affecting the mechanical and insulating characteristics of the log member.

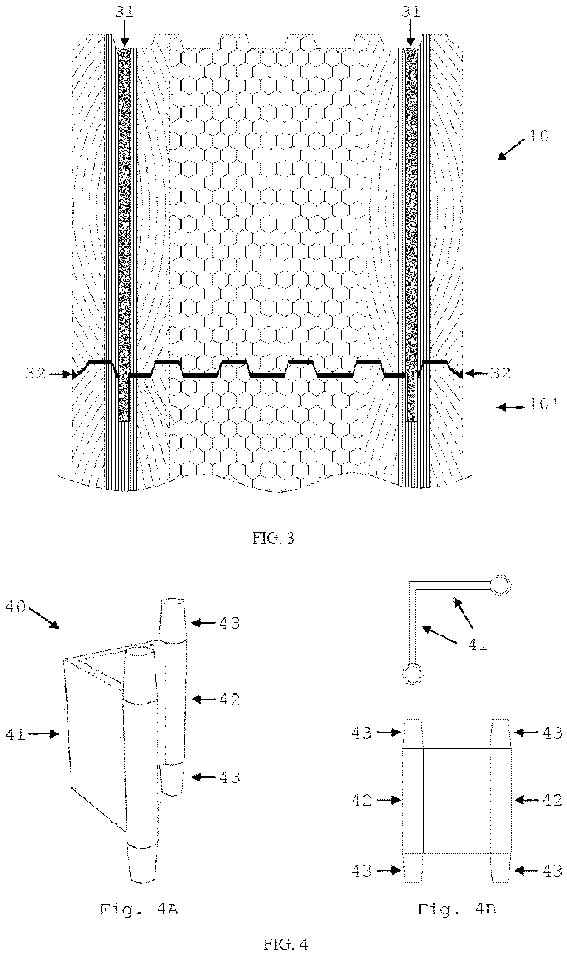

Fig. 3 shows one example of vertical assembly of the two construction elements 10 and 10' according to one method of the present invention. According to one form of embodiment of the present invention, the method to assembly a plurality of structural members in a vertical relationship to build a wall comprises fastening means 31 to create mechanical connections and a layer of sealing agent 32 to create airtight connections. Fastening means, crossing the composite boards all along their height, are advantageously used to provide a mechanical junction between the two stacked elements. Examples of fastening means can be customized screws characterized in that the central body is smooth to fix the upper construction element and the lower part is threaded to anchor the bottom element. Preferably the fastening means are designed to have a thickness comprised between about 5.5 and about 8 mm, in order not to affect the wooden planks, and a special head that, once fully screwed, can enter completely the wooden plank. Furthermore, as a non-restrictive example, fastening means are preferably screwed into the central transverse plank. According to another advantageous form of embodiment of the method of the present invention, a layer of sealant material 32 is used to create airtight connections at the interface between two construction elements 10 and 10' assembled in a vertical relationship. The sealant material can be advantageously an elastomer that presents weathering, ageing and temperature resistance and that has anti-microbial characteristics, for example silicone elastomer.

According to another form of embodiment of the present invention, the method to assembly a plurality of structural members to create corner junctions comprises miter joints and engineered joint elements. Fig. 4 shows respectively a three-dimensional scheme (fig. 4A) and an orthogonal projection (fig. 4B) of the engineered joint element. With reference to fig. 4, the engineered joint element according to the present invention is indicated in its entirety by the reference number 40.
Joint element 40 is preferably formed by galvanized steel in order to have proper corrosion resistance. Furthermore, it is advantageously formed by L-shaped blade 41, which has cylindrical parts 42, each ending with two truncated cone parts 43 at the two extremities.

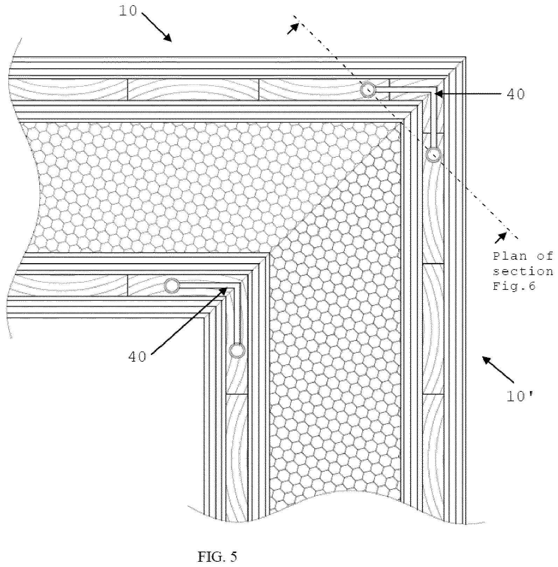

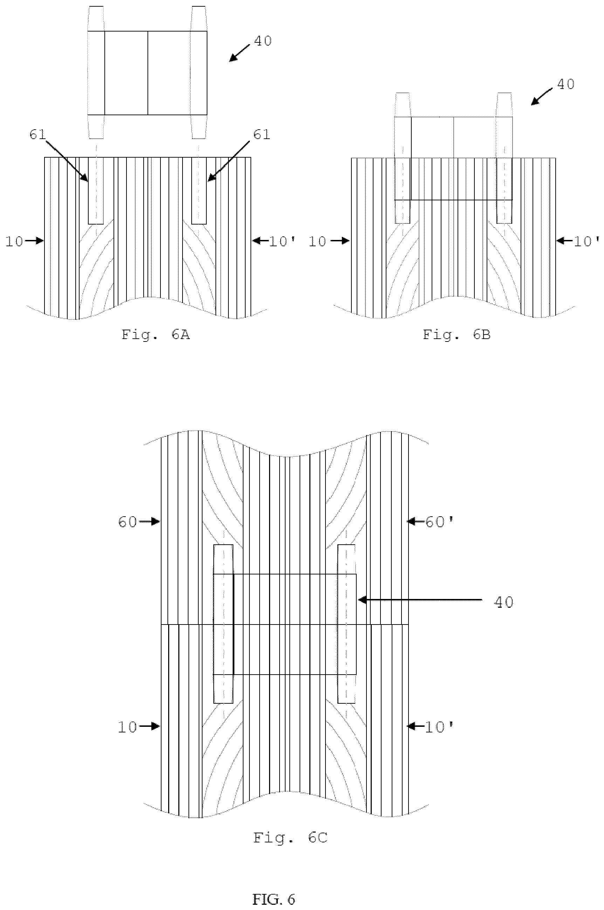

When creating a corner junction, as shown in the plan view in fig. 5, two structural members 10 and 10' are mitered and beveled at their ends preferably by a 45 degrees cut along their transverse direction, and juxtaposed at their ends, with the structural members arranged at a typical angle of 90 degrees between each other. The interfaces are preferably glued together using a bonding agent, for example a fix-bond on polyurethane base. Fig. 5 also shows two joint elements 40 half-hammered into the two incident construction elements 10 and 10', according to the method described in more detail in the following fig.6.

Fig. 6 is a cross-section of the corner junction shown in fig. 5, before (fig. 6A) and after (fig. 6B) the insertion of the engineered joint element 40. For ease of comprehension, the plan of section is shown in fig. 5 and named as the correspondent fig. 6. Fig. 6 also shows the third step of the method to assembly a plurality of structural members to create corner junctions, when two upper juxtaposed members are stacked (fig. 6C). In particular, fitting holes 61 having diameter equal to that of the truncated cone 43 in its medium height and having depth equal to the half eight of joint element 40, are fabricated into the two lower juxtaposed construction elements 10 and 10' by drilling the inner plank of the correspondent outer boards. Subsequently, joint element 40 is half-hammered into the two incident construction elements 10 and 10'. This configuration was specially invented and designed to facilitate the insertion of the engineered joint element inside the holes, thanks to the conical head, and to submit the two log members of the corner junction to a tensile stress by inserting the cylindrical part, whose diameter is slightly larger than the holes one. In this way, the two heads of the log members of the corner junction are pushed towards each other, thus avoiding any play and allowing the corner junction to absorb and compensate any eventual small deformations of the construction elements.
Finally, as shown in fig. 6C, the two upper juxtaposed members 60 and 60', previously glued and drilled as described, are hammered as long as the joint element 40 enters their planks for half of its height. This form of embodiment ensures solidity, continuity of the thermal insulation and complete absence of thermal bridges in the corner junction.

The following numbered paragraphs set out particular combinations of features which are considered relevant to particular embodiments of the present disclosure.
1. A novel insulated cross-laminated construction element suitable for constructing walls comprising
   a. an inner core to provide the construction element with thermal insulating, fire retardant and insect resistant properties, and reduce the amount of wood fiber needed;
   b. two outer cross-laminated composite boards to provide the construction element with structural strength, dimensional stability, additional thermal insulation, aesthetic appeal and possibility to host utility conduits.
2. An insulated cross-laminated construction element of paragraph 1 characterized in that the inner core is preferably manufactured from a rigid foam plastic material, for example extruded polystyrene foam.
3. An insulated cross-laminated construction element of paragraph 2 characterized in that the insulation value of the inner core is adjusted by varying the type and the thickness of the foam material.
4. An insulated cross-laminated construction element of paragraph 1 characterized in that the two outer cross-laminated composite boards are composed of at least two planks whose fibers extend in the longitudinal direction of the beam, and at least one plank, which is sandwiched and weatherproof glued between the two longitudinal planks, with its fibers extending transversely to the longitudinal direction of the construction element, so that each significant shrinkage, particularly that in the transversal direction of the beam, is prevented.
5. An insulated cross-laminated construction element of paragraph 4 characterized in that each outer cross-laminated composite board may consist of three layers of planks, but advantageously it can also comprise a plurality of layers, always a layer whose fibers direction runs transversely to the longitudinal direction of the beam, sandwiched between two timber planks whose fibers run parallel to the longitudinal direction of the log member, so that ultimately each outer board always has an odd number of planks.
6. An insulated cross-laminated construction element of paragraph 4 characterized in that the timber planks are preferably manufactured from high quality wood, for example the Siberian pine, thanks to its minimum content of bacterial cells per cubic meter and its superior ability to accept loads due to its small tree-ring width and high density, which are typical of the corresponding regional climate with short summers and long, very cold winters.
7. An insulated cross-laminated construction element of paragraph 4 characterized in that the outer planks are preferably kiln dried up to a moisture content with a value comprised between about 5 and about 18% and more preferably comprised between about 8 and about 14%.
8. An insulated cross-laminated construction element of paragraph 4 characterized in that the longitudinal and transverse planks are cold-pressed and glued to each other to form the outer composite boards by means of bonding agents that show excellent humidity resistance, such as Polyvinyl Acetate in aqueous dispersion.
9. An insulated cross-laminated construction element of paragraph 1 characterized in that the outer composite boards are preferably bonded to the inner core through the use of a structural grade adhesive, such as a formaldehyde and solvent free polyurethane, with proven durability and fire safety, so that no need of fixing means, transversely crossing the entire width of the construction element, is required.
10. An insulated cross-laminated construction element of paragraph 1 characterized in that a tongue and groove arrangement which involves both the inner core and the outer boards is fabricated by milling the respective top and bottom surfaces of the construction element to ensure shear-resistant and self-centering connections.
11. An insulated cross-laminated construction element of paragraph 1 characterized in that utility conduits can be formed when the structural members are stacked together during wall construction, by creating one or more notches running along the entire height of the construction element, which involve at least one or two inside planks, or a part of them, of the outer composite board.
12. A method of using the novel insulated cross-laminated construction element comprising the procedures and tools
   a. to assembly a plurality of structural members in vertical relationship to build a wall and
   b. to create corner junctions in a miter joint form.
13. A method of using the novel insulated cross-laminated construction element of paragraph 12 characterized in that the procedures and tools to assembly a plurality of structural members in vertical relationship to build a wall comprise:
   a. fastening means to create mechanical connections and
   b. a sealing agent to create airtight connections.
14. A method of using the novel insulated cross-laminated construction element of paragraph 13 characterized in that fastening means, crossing the composite outer boards all along their height, are advantageously used to provide a mechanical junction between two vertically stacked elements.
15. A method of using the novel insulated cross-laminated construction element of paragraph 13 characterized in that a sealant material, such as a silicone elastomer, is used to create airtight connection between a plurality of structural members assembled in a vertical relationship.
16. A method of using the novel insulated cross-laminated construction element of paragraph 12 characterized in that the method to assembly a plurality of structural members to create corner junctions comprises:
   a. miter joints and
   b. engineered joint elements.
17. A method of using the novel insulated cross-laminated construction element of paragraph 16 characterized in that, when creating a corner junction, two structural members are cut along their transverse direction with an angle preferably comprised between about 30 and about 60 degrees, typically about 45 degrees, and juxtaposed at their ends, and their interfaces are preferably glued together using a bonding agent, for example a fix-bond on polyurethane base.
18. A method of using the novel insulated cross-laminated construction element of paragraph 16 characterized in that the engineered joint element is advantageously formed by an L-shaped blade which has a cylindrical part ending with a truncated cone at each of the two extremities and it is preferably formed by galvanized steel, in order to guarantee a proper corrosion resistance.
19. A method of using the novel insulated cross-laminated construction element of paragraph 16 characterized in that fitting holes, having their diameter equal to the diameter of the truncated cone in its medium height and their depth equal to the half eight of the joint element, are fabricated into the two lower juxtaposed construction elements and the joint element is subsequently half-hammered into the fitting holes.
20. A method of using the novel insulated cross-laminated construction element of paragraph 16 characterized in that two upper juxtaposed members, previously glued and drilled, are hammered as long as the joint element enters their planks for half of its height.

## Claims

1. A novel insulated cross-laminated construction element suitable for constructing walls **comprising**
a. an inner core to provide the construction element with thermal insulating, fire retardant and insect resistant properties, and reduce the amount of wood fiber needed;
b. two outer cross-laminated composite boards to provide the construction element with structural strength, dimensional stability, additional thermal insulation, aesthetic appeal and possibility to host utility conduits.

2. An insulated cross-laminated construction element of claim 1 **characterized in that** the inner core is preferably manufactured from a rigid foam plastic material, for example extruded polystyrene foam.

3. An insulated cross-laminated construction element of claim 2 **characterized in that** the insulation value of the inner core is adjusted by varying the type and the thickness of the foam material.

4. An insulated cross-laminated construction element of claim 1 **characterized in that** the two outer cross-laminated composite boards are composed of at least two planks whose fibers extend in the longitudinal direction of the beam, and at least one plank, which is sandwiched and weatherproof glued between the two longitudinal planks, with its fibers extending transversely to the longitudinal direction of the construction element, so that each significant shrinkage, particularly that in the transversal direction of the beam, is prevented.

5. An insulated cross-laminated construction element of claim 4 **characterized in that** each outer cross-laminated composite board may consist of three layers of planks, but advantageously it can also comprise a plurality of layers, always a layer whose fibers direction runs transversely to the longitudinal direction of the beam, sandwiched between two timber planks whose fibers run parallel to the longitudinal direction of the log member, so that ultimately each outer board always has an odd number of planks.

6. An insulated cross-laminated construction element of claim 4 **characterized in that** the timber planks are preferably manufactured from high quality wood, for example the Siberian pine, thanks to its minimum content of bacterial cells per cubic meter and its superior ability to accept loads due to its small tree-ring width and high density, which are typical of the corresponding regional climate with short summers and long, very cold winters.

7. An insulated cross-laminated construction element of claim 4 **characterized in that** the outer planks are preferably kiln dried up to a moisture content with a value comprised between about 5 and about 18% and more preferably comprised between about 8 and about 14%.

8. An insulated cross-laminated construction element of claim 4 **characterized in that** the longitudinal and transverse planks are cold-pressed and glued to each other to form the outer composite boards by means of bonding agents that show excellent humidity resistance, such as Polyvinyl Acetate in aqueous dispersion.

9. An insulated cross-laminated construction element of claim 1 **characterized in that** the outer composite boards are preferably bonded to the inner core through the use of a structural grade adhesive, such as a formaldehyde and solvent free polyurethane, with proven durability and fire safety, so that no need of fixing means, transversely crossing the entire width of the construction element, is required.

10. An insulated cross-laminated construction element of claim 1 **characterized in that** a tongue and groove arrangement which involves both the inner core and the outer boards is fabricated by milling the respective top and bottom surfaces of the construction element to ensure shear-resistant and self-centering connections.

11. An insulated cross-laminated construction element of claim 1 **characterized in that** utility conduits can be formed when the structural members are stacked together during wall construction, by creating one or more notches running along the entire height of the construction element, which involve at least one or two inside planks, or a part of them, of the outer composite board.

12. A method of using the novel insulated cross-laminated construction element **comprising** the procedures and tools
a. to assembly a plurality of structural members in vertical relationship to build a wall and
b. to create corner junctions in a miter joint form.

13. A method of using the novel insulated cross-laminated construction element of claim 12 **characterized in that** the procedures and tools to assembly a plurality of structural members in vertical relationship to build a wall comprise:
a. fastening means to create mechanical connections and
b. a sealing agent to create airtight connections.

14. A method of using the novel insulated cross-laminated construction element of claim 13 **characterized in that** fastening means, crossing the composite outer boards all along their height, are advantageously used to provide a mechanical junction between two vertically stacked elements.

15. A method of using the novel insulated cross-laminated construction element of claim 13 **characterized in that** a sealant material, such as a silicone elastomer, is used to create airtight connection between a plurality of structural members assembled in a vertical relationship.

16. A method of using the novel insulated cross-laminated construction element of claim 12 **characterized in that** the method to assembly a plurality of structural members to create corner junctions comprises:
a. miter joints and
b. engineered joint elements.

17. A method of using the novel insulated cross-laminated construction element of claim 16 **characterized in that**, when creating a corner junction, two structural members are cut along their transverse direction with an angle preferably comprised between about 30 and about 60 degrees, typically about 45 degrees, and juxtaposed at their ends, and their interfaces are preferably glued together using a bonding agent, for example a fix-bond on polyurethane base.

18. A method of using the novel insulated cross-laminated construction element of claim 16 **characterized in that** the engineered joint element is advantageously formed by an L-shaped blade which has a cylindrical part ending with a truncated cone at each of the two extremities and it is preferably formed by galvanized steel, in order to guarantee a proper corrosion resistance.

19. A method of using the novel insulated cross-laminated construction element of claim 16 **characterized in that** fitting holes, having their diameter equal to the diameter of the truncated cone in its medium height and their depth equal to the half eight of the joint element, are fabricated into the two lower juxtaposed construction elements and the joint element is subsequently half-hammered into the fitting holes.

20. A method of using the novel insulated cross-laminated construction element of claim 16 **characterized in that** two upper juxtaposed members, previously glued and drilled, are hammered as long as the joint element enters their planks for half of its height.
